Europäisches Patentamt

European Patent Office

Office européen des brevets

(11) Publication number: 0 404 299
A1

# EUROPEAN PATENT APPLICATION

(21) Application number: 90303437.9

(22) Date of filing: 30.03.90

(51) Int. Cl.5: H02K 29/00, H02K 21/24

The title of the invention has been amended (Guidelines for Examination in the EPO, A-III, 7.3).

The title of the invention has been amended (Guidelines for Examination in the EPO, A-III, 7.3).

(30) Priority: 30.03.89 GB 8907216

(43) Date of publication of application:
27.12.90 Bulletin 90/52

(84) Designated Contracting States:
AT BE CH DE DK ES FR GB GR IT LI LU NL SE

(71) Applicant: Cavanagh, Patrick E.
95 Balmoral Avenue
Toronto, Ontario M4V 1J5(CA)

(72) Inventor: Cavanagh, Patrick E.
95 Balmoral Avenue
Toronto, Ontario M4V 1J5(CA)

(74) Representative: Muir, Ian R. et al
HASELTINE LAKE & CO. Hazlitt House 28
Southampton Buildings Chancery Lane
London WC2A 1AT(GB)

(54) Brushless motor.

(57) A novel form of brushless motor is described wherein an array of strong permanent magnets is provided around the periphery of a disc-shaped or cylindrical rotor element and a pulsed magnetic field is produced in a stator to cause the strong permanent magnets in the array to be repulsed and hence the rotor element to turn. The pulsed magnetic field may be produced by electromagnetic coils or by pole-switching permanent magnets.

FIG.1.

## CIRCUMFERENTIAL MOTOR

### FIELD OF INVENTION

The present invention relates to brushless dynamoelectric machines, in particular, to a novel motor structure wherein the motor element, in the form of a disc-shaped or cylindrical article, has a plurality of permanent magnets arranged at or adjacent its periphery.

### BACKGROUND OF THE INVENTION

A number of brushless motor structures has been proposed employing a permanent magnet rotor associated with some form of stator which contains elements which produce a magnetic field to interact with the permanent magnets to produce rotary torque.

### SUMMARY OF INVENTION

In the present invention, a novel form of motor is provided wherein the rotor takes the form of a cylinder or a disc and hence has a circular cross-section, and is mounted for rotation about an axle. A plurality of permanent magnets is provided adjacent to the periphery of the rotor. By providing the permanent magnets at the periphery of the rotor, a considerably improved mechanical torque is achieved. The plurality of permanent magnets is subjected to pulses of opposite polarity to cause them to be repulsed and hence rotary motion is achieved about the axle on which the rotor is mounted.

### BRIEF DESCRIPTION OF DRAWINGS

Figure 1 is an elevational view of a rotary fan provided in accordance with one preferred embodiment of the invention, illustrating the differential force requirements;

Figure 2 illustrates two states of the fan rotor with reference to switched stator coils in the preferred embodiment of the invention;

Figure 3 illustrates the pulsing sequence in a single quadrant of the fan;

Figure 4 is a sectional view of the fan of figure 2;

Figure 5 is a graphical representation of the properties of switching magnets;

Figure 6 is an elevational view of a rotor element of a motor incorporated into a vehicle wheel assembly in accordance with another embodiment of the invention;

Figure 7 is an elevational view of a stator element of the same motor;

Figure 8 is a sectional view of the motor incorporating the rotor and stator elements of Figure 6 and 7;

Figure 9 contains elevational and sectional views of a motor structure incorporated into a laundry drier drum in accordance with a further embodiment of the invention; and

Figure 10 contains elevational and sectional views of the motor structure of Figure 9, with the stator magnets arranged in a different array from that shown in Figure 9.

### GENERAL DESCRIPTION OF INVENTION

In accordance with one embodiment of the present invention, there is provided a circumferential motor having permanent magnets mounted on a rotor and reversing polarity stator elements which normally attract the rotor magnets but whose polarity is reversible to repel the magnets, so that motion is imparted to the rotor.

The reversing polarity stator elements preferably are provided by permanent magnets each having a stator coil associated therewith which, when activated by an electric current pulse, establishes a magnetic field which forces the stator permanent magnet to a reverse polarity. Once the electrical current pulse is removed, the permanent magnet returns to its original strength and polarity.

By timing the current pulse to be applied to the coil when a rotor magnet enters a stator unit as a result of attraction by the stator magnet, repulsion of the rotor magnet occurs as the stator magnet polarity is reversed. By repetitious pulsing of the coil, continuous rotation of the stator is effected.

The rotor in the present invention may comprise a disc or cylinder with permanent magnets mounted on the outside or inside circumference. The rotor may take a variety of physical forms, for example, a fan for moving air, comprising a plurality of radial arms or fan blades, a motor vehicle wheel, or a drum of a laundry drier.

Alternatively, the stator magnets may normally have a polarity to repel the rotor magnets. In this embodiment, the coil is activated to reduce the magnetic field sufficiently to allow a rotor magnet to enter a stator unit, whereupon the magnetic field is switched off and the rotor magnet is repelled by the stator magnet as its original polarity and strength are restored. In this embodiment, the stator magnets are not forced below one half their original residual magnetism (Br) by the stator coil field pulse.

The permanent magnets of the rotor may be constructed of any conventional magnetic material, including conventional ceramic ferrites or the more powerful neodymium magnets.

In another embodiment of the invention, the stator may comprise a plurality of electromagnetic coils which are pulsed to generate a magnetic field opposing that of the rotor magnet and thereby to repel the rotor magnet. It is also possible to use this arrangement as a generator, with rotation of the rotor causing the generation of electricity in the coils.

## DESCRIPTION OF PREFERRED EMBODIMENTS

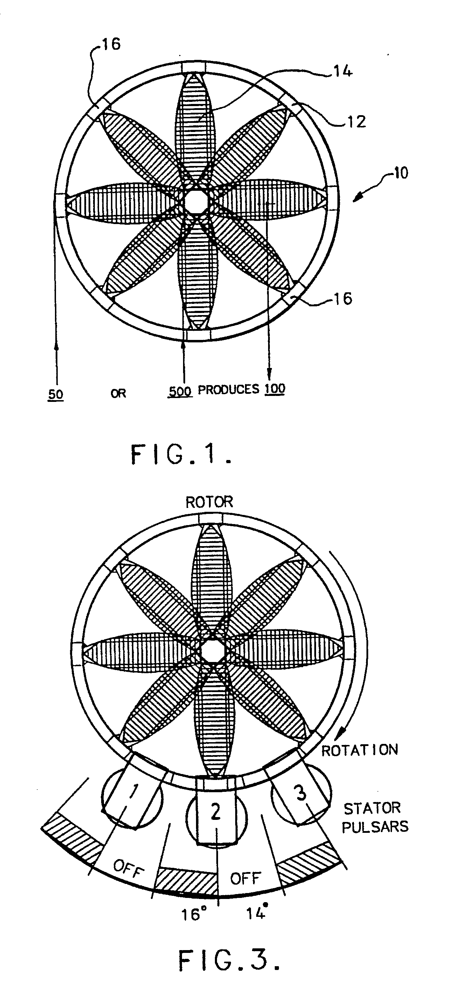

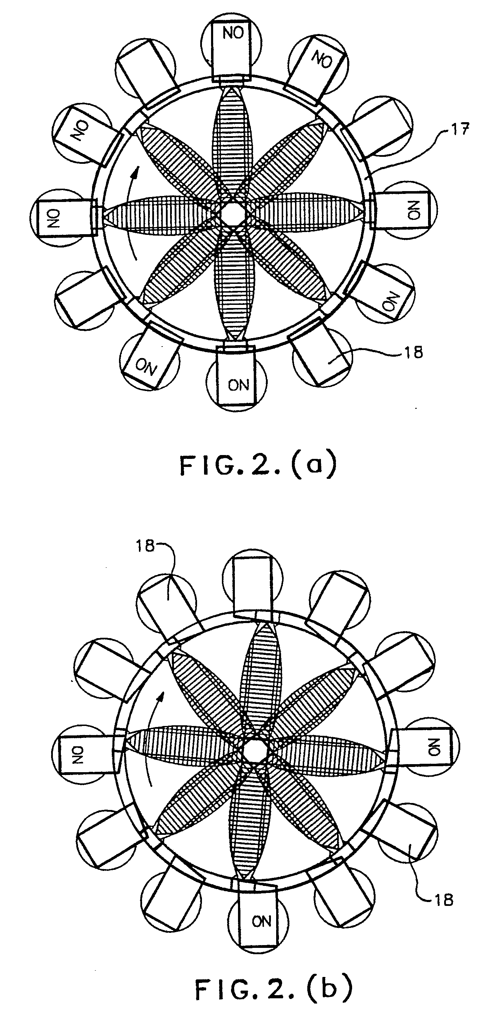

Referring first to Figures 1 to 4 of the drawings, there is illustrated therein the application of the principles of the present invention to a fan structure. A fan rotor 10 is mounted on an axle 12 for rotation thereabout and comprises eight radically-extending arms 14 each of which has a strong permanent magnet 16 attached at the radially-outer extremity thereof on a circumferential structural element 17.

An outer circumferential stationary ring of equally circumferentially spaced switching magnet stator elements 18, numbering twelve in all is provided surrounding the circumferential element 17 so as to be operatively associated with the permanent magnets 16. The switching magnets 18 may normally have a polarity opposite to that of the adjacent pole of the rotor magnet 16, so as normally to attract the rotor magnet 16.

Each switching magnet 18 has a magnetic coil 20 associated therewith, which, when activated, causes a reversal of the polarity of the switching magnet 18, thereby causing repulsion of the rotor magnets 16.

Any convenient form of switching system, such as a mechanical, optical or magnetic switching system, may be employed to initiate an electrical pulse to the coil 20 when each rotor magnet 16 is passing through the switching magnet 18.

The length of the electrical pulse applied to the coil 20 and hence the length of the pulse of reversed magnet polarity, may be adjusted mechanically by changing magnet length in the circumferential direction, when a magnet is employed to initiate and end the pulse.

For optical or mechanical switching, a shutter or a reflective surface may be used to initiate and control the pulse to repel each rotor magnet from each pulsing coil. Any other convenient system to obtain pulsed timed polarity reversal may be employed.

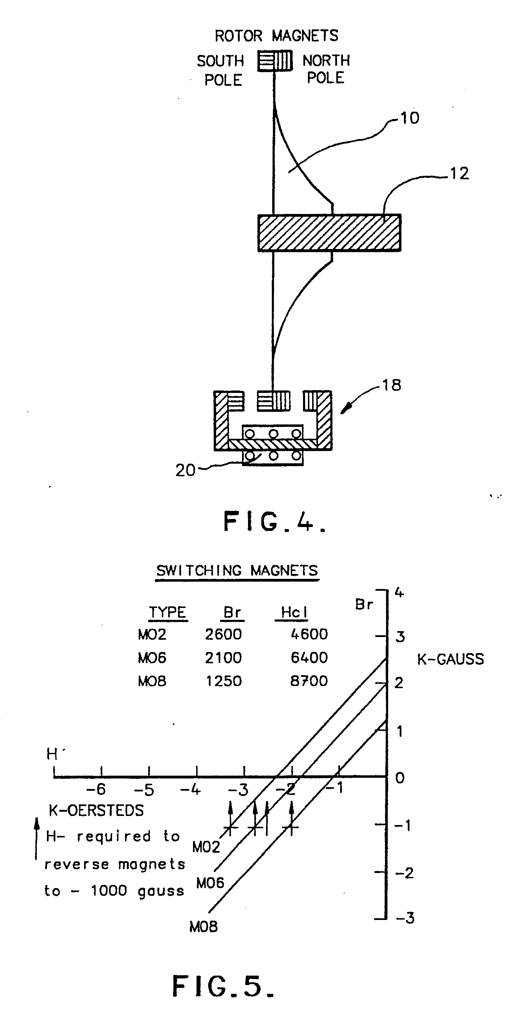

The sequence of events in each quadrant of the fan design is the same, so that switches are required in only one of the quadrants with each switch controlling the pulse for the four corresponding coils in that quadrant. Three switches only are required (see Figure 3), providing ninety-six total pulses and twenty-four switch operations per revolution.

A digital pulse width control system may be employed to initiate a series of three pulses when a two-phase pulsing coil winding is employed. The circuit controls tne onset, duration and level of the three pulses to energize the three coils in each quadrant sequentially, in an eight rotor by twelve stator magnet version, as illustrated. With a lesser power requirement for the unit, activation of only one quadrant at one time is sufficient. In either case, only one switch is required, giving twenty-four total pulses per revolution.

Alternatively, the switching magnet 18 may normally be repulsive to the rotor magnet 16, in which case the magnet coil 20 is activated to reduce the magnetic field from the magnet 18, to permit the rotor magnet 16 to approach the switching magnet, whereupon removal of the coil field results in repulsion of the rotor magnet 16.

The stator magnets 18 are constructed of a magnetic material which permits them to be driven past zero magnetization to reverse polarity and then to recover to their original magnetic state when the field coil pulse is ended.

The magnetic properties of some switching magnets are shown in Figure 5. The opposing fields reversing the polarity of the stator magnets to -1000 gauss is plotted when the opposing field is removed, the magnet recovers to its original strength, while its polarity is reversed.

Further information with respect to such magnets and their manufacture is contained. in UK patent application No. 8927172.0 filed December 1, 1989, entitled "Pole-Switching Magnets".

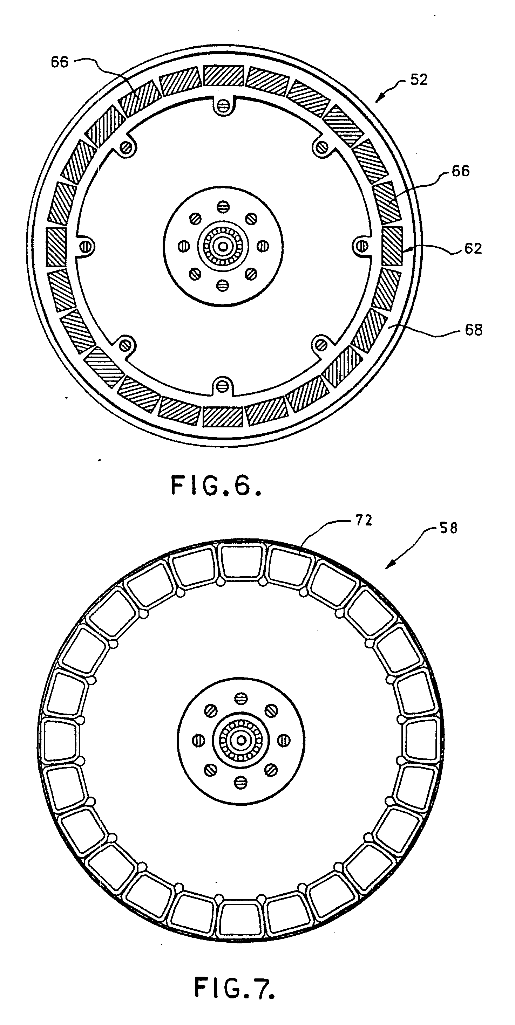

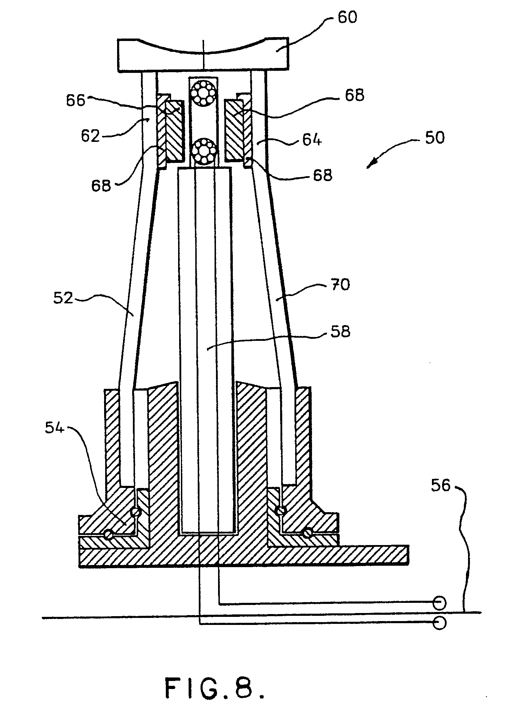

Turning now to Figures 6, 7 and 8, there is shown therein the application of the principles of the present invention to a motor vehicle wheel 50. As seen therein, a rotor 52 is mounted at its radially-inner extremity by bearings 54 for rotation about a stationary tube shaft 56, surrounds a radially-extending stator element 58 and is provided at its radially outer extremity with a tire mount 60.

The rotor 52 includes opposed arrays 62 and 64 of permanent magnets which each includes a plurality of individual permanent magnets 66, with each adjacent magnet having an opposite polarity. Each opposed pair of permanent magnets 66 also is provided of opposite polarity. The magnetic circuit for each arcuately adjacent pair of permanent magnets is completed by a steel annulus 68 to which the individual permanent magnets 66 are mounted. The steel annulus 68 is mounted to the rotor wall 70, which may be of molded plastic material of suitable strength.

The stator 58 comprises a plurality of electromagnetic coils 72 which are pulsed by suitable circuity to generate an electromagnetic field to oppose that of the adjacent permanent magnet 66, thereby to cause rotation of the rotor 52 about the stationary shaft 56.

The pulsing of the coils 72 by a d.c. current to effect rotation of the rotor may be controlled in any convenient manner, for example, from signals generated by the rotor and may be supplied from any desired electrical power source, for example, batteries, which may be of the type rechargeable from solar cells.

There are many potential control circuits available to provide the required performance of such a wheel 50 used as one or as all of the wheels of a vehicle, in order to drive the vehicle. In addition, the wheel 50 may operate as a generator of electricity for a variety of vehicle uses, for example, during a downhill run.

The principles of operation of the structure of Figures 6 to 8, wherein an outer rotor encloses an inner stator, are applicable to a variety of other uses.

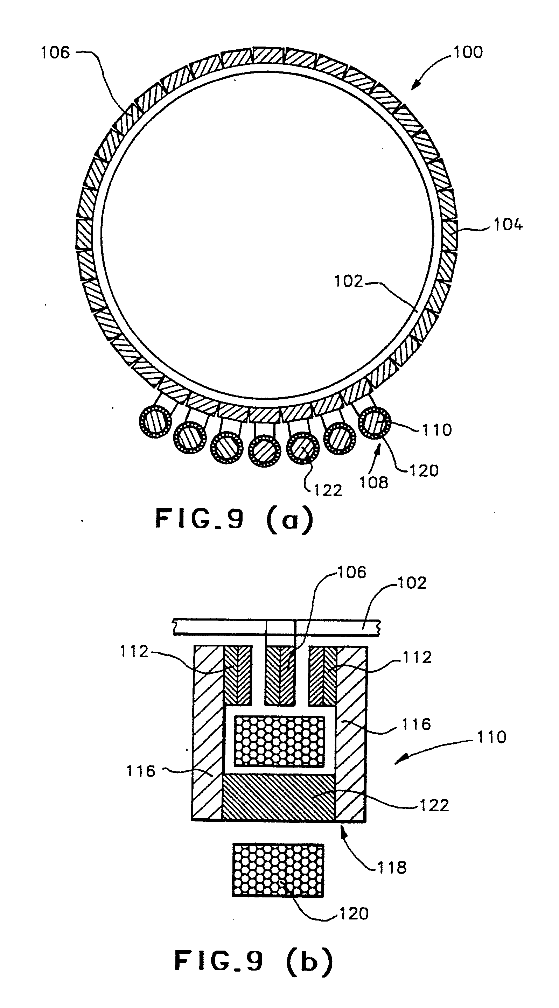

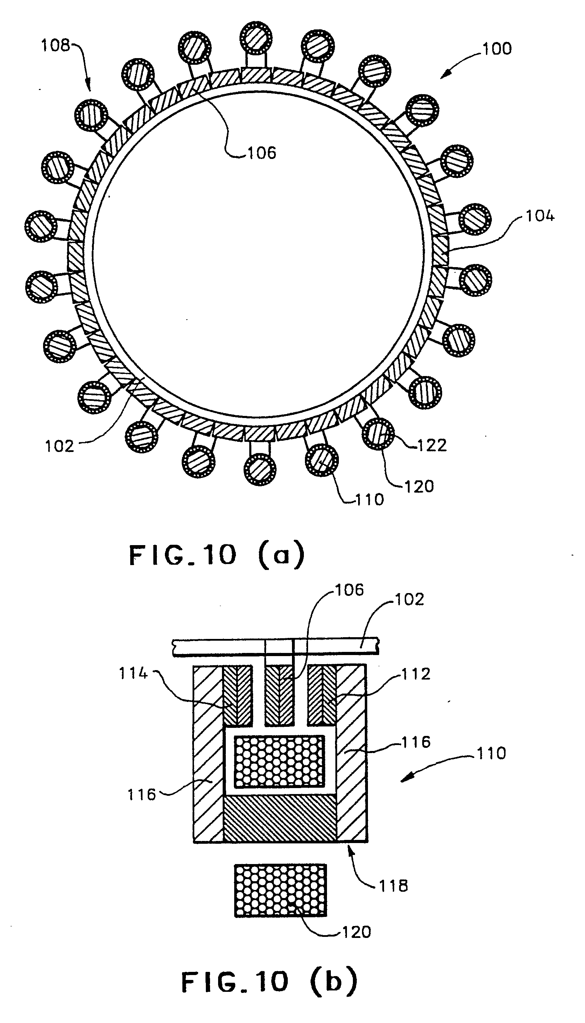

Considering now Figures 9 and 10, there is shown therein the application of the principles of the present invention to a laundry drier drum 100. As in the case of the embodiment of Figures 1 to 4, this arrangement employs an outer stator surrounding an inner rotor.

A laundry drier drum 102 is mounted for rotation on its axis in any convenient manner and constitutes the rotor of the motor. An array 104 of permanent magnets is arrayed on the outer surface of the drum. In the array 104, each magnet 106 includes back-to-back north and south poles and each arcuately-adjacent magnet has an opposite polarity. More than one array of such magnets may be employed, if desired.

For each array 104 of permanent magnets is provided a stator 108 comprising a plurality of pole-switching magnet assemblies 110. Each pole-switching magnet assembly comprises opposed permanent magnets 112, 114 of opposite polarity and each comprising two poles. The magnets 112, 114 are mounted to arms 116 of a core 118. A coil 120 is provided surrounding a cross-piece 122 of the core 118.

In the case of Figure 9, an arcuate array of juxtaposed pole-switching magnet assemblies 110 is provided, although there may be employed a number of such assemblies equal to the number of permanent magnets 106 in the array 104. In the case of Figure 10, there is a lesser number of pole-switching magnet assemblies 110 than there are permanent magnets 106 in the array 104 and arranged equi-distantly arcuately spaced surrounding the rotor 102.

The stator magnets 112, 114 are switched polarity by the operation of the coil 120, so as to attract a rotor magnet 106 as it approaches the pole-switching magnet assembly 110. As the rotor magnet 108 leaves the assembly 110, the coil 120 is turned off, so that the stator magnets 112, 114 regain their original polarity and, accordingly, repel the rotor magnet 106. Depending on the power requirement, an array of seven pole-switching assembles 110 may be sufficient to provide a continuous driving force at the circumference of the drier drum 102, as shown in Figure 9.

In Figure 10, two or more diametrically-opposite pairs of magnets can be activated at the same time to provide increased torque. The switching magnets may be provided opposing as the rotor magnet approaches. The field of the rotor magnet along with a field from the activated coil reduces the field of the stator switching magnet, allowing the rotor magnet to pass easily. The stator magnet then is returned to its normal strength and polarity, resulting in the rotor magnet being repelled.

At start up, a first surge of power usually needs to be applied to all the stator coils but as the drum speeds up, the current requirement falls and the control circuit then can disconnect some of the pairs of coils for continuous operation.

## SUMMARY OF DISCLOSURE

In summary of this disclosure, the present invention provides a novel form of dynamoelectric machine wherein an array of permanent magnets is provided at the circumferential periphery of a rotor and magnetic field pulses are employed to effect movement of the rotor. Modifications are possible within the scope of this invention.

**Claims**

1. A brushless electric motor, characterized by (a) rotor means arranged to rotate about an axis having a circular cross-section and a plurality of permanent magnets located in equally-arcuately spaced relation adjacent the periphery of said rotor, and (b) stator means comprising magnetic field producing means located in operative relation to said rotor means whereby successive ones of said permanent magnets may align with said magnet field producing means and constructed to apply intermittent pulses of magnetic field of the same polarity as said permanent magnet when in said alignment to cause repulsion of said permanent magnet and rotation of said rotor about said axis.

2. The motor claimed in claim 1, in which said magnetic field producing means comprises electromagnetic coil means having means to apply pulses of d.c. current thereto.

3. The motor claimed in claim 1, in which said magnetic field producing means comprises a poleswitching magnet which normally has a polarity opposite to that of said permanent magnet to draw the same into said alignment and which polarity is reversible under the influence of an electromagnetic coil to effect said repulsion when in said alignment.

4. The motor claimed in claim 1, in which said magnetic field producing means comprises a poleswitching magnet which normally has a polarity opposite to that of said permanent magnet and which polarity is neutralizable under the influence of an electromagnetic coil to permit said permanent magnet to move into said alignment, whereby removal of the influence of said electromagnetic coil results in said repulsion.

5. The motor claimed in any one of claims 1 to 4, in which said rotor takes the form of a fan having a plurality of radially directed arms extending from an axle to a circumferential periphery, said plurality of permanent magnets is positioned one at each radial extremity of said radially-directed arms, and said stator means comprises a plurality of said magnetic field producing means arranged in equally-arcuated spaced relation about said circumferential periphery.

6. The motor claimed in claim 5, in which each said permanent magnets has a north pole extending to one axial side of the circumferential periphery and a south pole extending the other axial side of the circumferential periphery, each said magnetic field producing means comprises a pair of pole-switching magnets mounted in facing relation to define a gap through which each said permanent magnet moves successively, core means magnetically joining said pole-switching magnets and electromagnetic coil means mounted about said core to reverse the polarity of said pole-switching magnets to effect said repulsion.

7. The motor claimed in any one of claims 1 to 4, which is of claim 1 configured as a wheel hub onto which a tire may be mounted, and in which said rotor comprises a hollow housing rotatably mounted on a central stationary shaft and enclosing said stator element, two arrays of said permanent magnets each arranged with adjacent magnets of opposite polarity and in magnetic circuit via an annular steel plate and one on each side of a gap between which is located said stator with magnets of opposite poles facing each other, and said stator comprises a plurality of axially-directed electromagnetic coils located in said gap and corresponding in number with the number of permanent magnets in each of said arrays, whereby said wheel may act as a motor when pulses of d.c. electric current are applied to said coils and said wheel may act as a generator when rotative motion is applied to said rotor and means for removing pulses of d.c. current is connected to said coils.

8. The motor claimed in any one of claims 1 to 4 configured as a drum, which constitutes said rotor, and in which at least one array of said permanent magnets is arranged on the external surface of the drum with north and south poles axially directed, and said magnetic field producing means comprises a pair of pole switching magnets of opposite polarity mounted in facing relation to define a gap through which each said permanent magnet moves successively, core means magnetically joining said pole-switching magnets and electromagnetic coil means mounted about said core to reverse the polarity of said pole-switching magnets to effect said repulsion.

9. The motor claimed in claim 8, in which an arc of said magnetic field producing means is provided adjacent one portion of the periphery of said drum.

10. The motor claimed in claim 8, in which a plurality of said magnetic field producing means is provided equally-arcuately spaced around the periphery of said drum.

16

14

12

10

16

50          OR          500  PRODUCES  100

# FIG.1.

ROTOR

ROTATION

1          2          3          STATOR
                                PULSARS

OFF          OFF

16°          14°

# FIG.3.

FIG. 2. (a)

FIG. 2. (b)

FIG.4.

SWITCHING MAGNETS

| TYPE | Br | Hcl |
|------|------|------|
| MO2 | 2600 | 4600 |
| MO6 | 2100 | 6400 |
| MO8 | 1250 | 8700 |

H−  required  to
reverse  magnets
to − 1000 gauss

FIG.5.

FIG.6.

FIG.7.

FIG.8.

FIG. 9 (a)

FIG. 9 (b)

FIG. 10 (a)

FIG. 10 (b)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-175903 (HITACHI,LTD. )<br>* page 10, line 18 - page 11, line 5; figures 6-8 * | 1, 2 | H02K29/00<br>H02K21/24 |
| X | EP-A-218522 (CGEE ALSTHOM)<br>* page 1, lines 26 - 31; figure 3 *<br>* page 6, lines 6 - 10 * | 1-4, 8-10 | |
| Y | * page 5, lines 10 - 19; figure 4 * | 5-7 | |
| Y | EP-A-140461 (ROTRON INC.)<br>* page 4, line 31 - page 5, line 2; figures 1, 2 * | 5, 6 | |
| Y | FR-A-2606951 (CGEE ALSTHOM)<br>* page 5, line 32 - page 6, line 3 *<br>* page 6, lines 11 - 12; figure 9 * | 7 | |
| X | DE-B-2430585 (GENERAL TIME CORP.)<br>* column 4, lines 36 - 47; figures 4-7 * | 1 | |
| X | US-A-4556828 (T.W.THOMPSON)<br>* figure 6 * | 1, 2 | **TECHNICAL FIELDS SEARCHED (Int. Cl.5 )**<br><br>H02K |
| X | WO-A-8702525 (H.WEH)<br>* figures 5, 6 * | 1, 2 | |

The present search report has been drawn up for all claims

| Place of search | Date of completion of the search | Examiner |
|---|---|---|
| BERLIN | 22 JUNE 1990 | LEOUFFRE, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document